(19) **Europäisches Patentamt / European Patent Office / Office européen des brevets**

(11) **EP 2 355 288 B1**

(12) **EUROPEAN PATENT SPECIFICATION**

(45) Date of publication and mention of the grant of the patent:
**06.05.2020 Bulletin 2020/19**

(21) Application number: **11152297.5**

(22) Date of filing: **27.01.2011**

(51) Int Cl.:
*H02H 1/00* *(2006.01)*     *H02H 3/38* *(2006.01)*

(54) **Device and method for processing input data of protective relay**

Vorrichtung und Verfahren für die Messwertverarbeitung von Schutzrelais

Dispositif et méthode pour le traitement des valeurs de mesure d'un relais de protection

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2010 KR 20100007466**

(43) Date of publication of application:
**10.08.2011 Bulletin 2011/32**

(73) Proprietor: **LS Industrial Systems Co., Ltd**
**Gyeonggi-do 431-080 (KR)**

(72) Inventor: **Jung, Jong Jin**
**361-270, Chungcheongbuk-do (KR)**

(74) Representative: **K&L Gates LLP**
**Karolinen Karree**
**Karlstraße 12**
**80333 München (DE)**

(56) References cited:
**WO-A2-99/10959     JP-A- 2003 344 463**

**Description**

**BACKGROUND OF THE INVENTION**

**Field of the invention**

This invention relates to a protective relay, more specifically, to a device and a method for processing an input data of a protective relay capable of restoring damage to allow a normal measurement if data stored in an accumulation buffer of the protective relay is damaged due to noise.

**Description of The Related Art**

In an electric power system, since various electric power plants are linked complicatedly, in case that a fault occurs at a position in the linked electric power system, the faulty section should be rapidly separated from the system, and a protective relay takes charge of such role.

With the rapid operation of the protective relay, one of the important elements is an accurate operation. Accordingly, in case of an ineffective value is measured due to external noises inputted to a DSP(Digital Signal Processor) for obtaining a standard value for determining operations of the protective relay, an erroneous operation may be generated if the ineffective value is processed without any correction thereto. Therefore, there is a need to take a complementary measure.

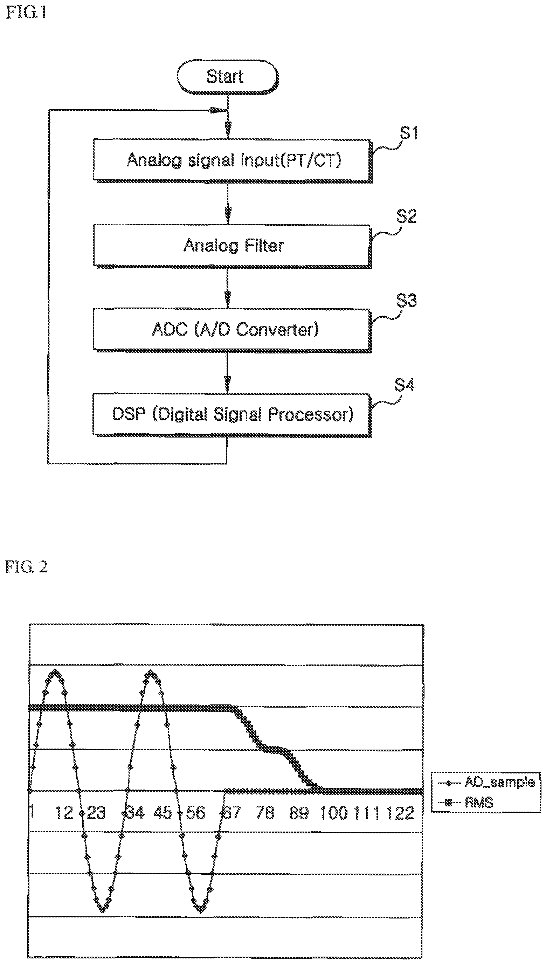

Namely, a recovering method is necessary if the measurement value which is the criteria for determining the protective relay is not effective. FIG. 1 is a flowchart showing a conventional processing procedure for analog input signal of the protective relay. As shown in the drawing, the analog signal inputted through detecting means such as power transformer(PT) and current convertor(CT) is transformed through an analog filter and an analog-digital converting part (ADC) into a digital data (S1~S3).

Hereinafter, in the digital signal processing part(DSP), a phasor operation algorithm is prosecuted (S4). FIG. 2 is showing each of change of RMS values if analog input becomes 0.

Herein, an AD_sample is a sampling data taken through the analog-digital converting part (ADC)and an RMS is a value obtained by a RDFT(Recursive Discrete Fourier Transform) in the digital signal processing part(DSP).

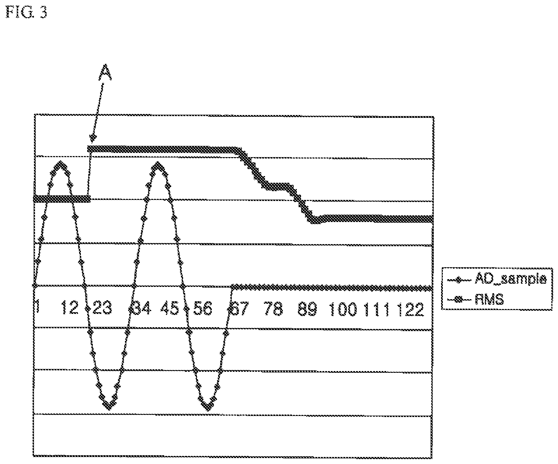

FIG. 3 shows a case when a disturbed signal is stored in an accumulation buffer of the RDFT due to external noise input at a point A of time.

In this case, as shown in the drawing, even though the analog input becomes 0, since the RMS value does not fall and keeps a constant value, it is not recovered before a rebooting is prosecuted.

This means that an erroneous operation may occur at the moment when a measurement value becomes larger than an operation preset value in relay elements controlling the operation based on size of the input signal. The erroneous operation should never occur in the protective relay.

Therefore, a complementary measure is needed because the erroneous operation often occurs while displaying a constant measurement value even in a situation where there is no analog input in operation.

WO99/10959 discloses a method for adjusting a compensating inductor in a distribution network for electrical energy comprising an adjustable compensating inductor (K) between the star point of a transformer (M) connected to the network, such as a power transformer or a separate earthing transformer, and the earth, the inductance of the compensating inductor then forming a part of a total zero inductance (L) of the distribution network for electrical energy. The method comprises the steps, in which a total earth capacitance (C) of the network is determined by means of a zero voltage transient associated with a connection change or fault situation of the network, when the total zero inductance (L) of the network is known, a total zero inductance value (Lr) of the network is determined, the inductance forming a reactance whose absolute value is the same as the absolute value of the reactance formed by the total earth capacitance of the network at a nominal frequency (fn), and the compensating inductor inductance (Lk) is adjusted so that the total zero inductance of the network equals the calculated value.

JP2003/344463 discloses a method for measuring frequency fluctuation and its deviation in an electric power system with high accuracy in an earlier stage, where instantaneous voltage values of an electric power system are measured at sampling time points for a predetermined sampling time length Ts, recursive discrete Fourier transformation is performed based on the instantaneous voltage values to find recursive voltage phasors, and frequency components about twice as high as the fundamental frequency are removed from the voltage phasors by using a filter. Phase deviation of phase components ($\phi$1, r) at a certain sampling time point from phase components ($\phi$1, r-1 or $\phi$1, r+1) at a sampling time point immediately before or after the sampling time point is calculated from the voltage phasors from which the frequency components about twice as high as the fundamental frequency are removed, and a time point when the phase deviation is produced is detected as the occurrence of frequency fluctuation. As discussed below, the present disclosure is direct to a dual buffering configuration, and the above discussed background art does not disclose any dual buffer operating configuration.

## SUMMARY OF THE INVENTION

Accordingly, the invention has been made to solve the above-mentioned problems occurring in the prior art. The present invention provides a device and method for processing an input data of a protective relay that can recover the input data and carry out normal measurements, even in the case when data is stored in an accumulation buffer of the protective relay which is damaged due to noises, etc.

The present invention is defined by the features of independent claims.

### Effect of the Invention

The invention has the advantage of restoring a damaged accumulation buffer value even if the accumulation buffer value is damaged by inflow of external noise when RDFT(Recursive Discrete Fourier Transform) operation is performed, which is a method of phasor operation of a digital protective relay enabling a normal measurement and performance of stable measurement operations.

## BRIEF DESCRIPTION OF THE DRAWINGS

FIG. 1 is a flowchart showing a conventional processing procedure for analog input signal of the protective relay according to the prior art. FIGS. 2 and 3 are wave shape diagrams showing each change of RMS value according to an analog input signal according to the prior art.

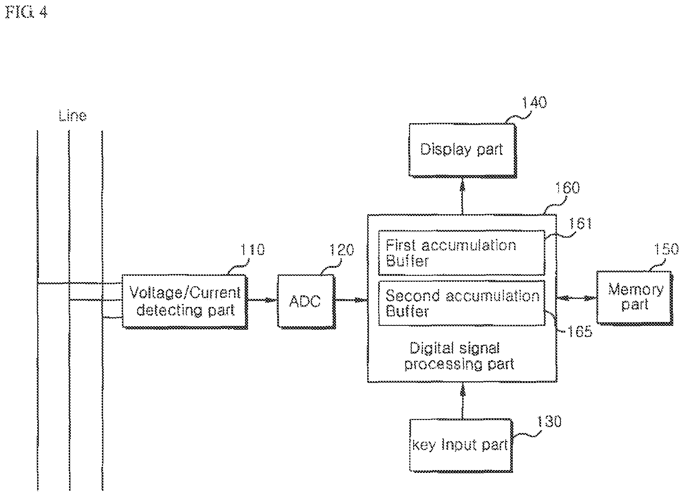

FIG. 4 is a schematic diagram showing a protective relay according to an exemplary embodiment of the present invention.

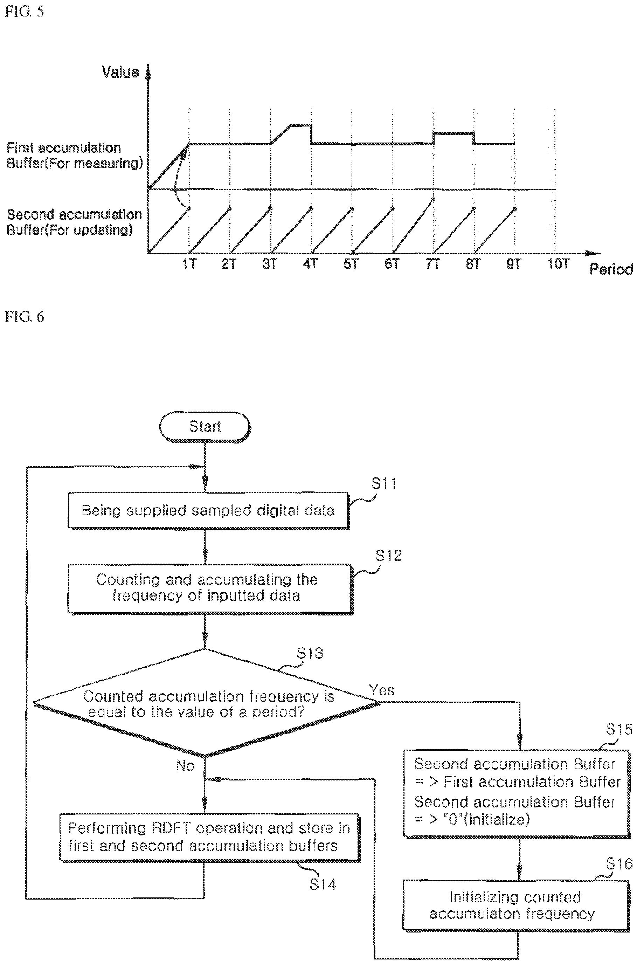

FIG. 5 is a view for explaining a data processing method using a dual structure accumulation buffer according to the present invention.

FIG. 6 is a flowchart showing processing procedures for an input data of a protective relay according to an exemplary embodiment of the present invention.

## DETAILED DESCRIPTION OF THE EXPLANARY EMBODIMENT

Hereinafter, a preferred embodiment of the invention will be described with reference to drawings attached thereto. Same constituent elements in drawings use same reference numerals in any places where it is possible, and explanation for well known functions and constitutions which may make indistinct a gist of the invention will be omitted.

FIG. 4 is a schematic diagram showing a protective relay according to an exemplary embodiment of the present invention. Herein, the protective relay 100 includes a voltage and current detecting part 110 and an analog-digital converting part 120, a key input part 130, a display part 140, a memory part 150, and a digital signal processing part 160.

The protective relay that the present invention is applied and generally referred to is an Intelligent Electronic Device(IED). The voltage and current detecting part 110 is constituted by a Potential Transformer(PT) changing a high voltage on the line to a constant ratio of low voltage and a Current Transformer(CT) changing a large current on the line to a constant ratio of low current.

The analog-digital converting part 120 (ADC) processes sampling analog input signals inputted through the voltage and current detecting part 110 with a predetermined sampling frequency and converts the sampled analog signal to digital data.

The key input part 130 is constituted to input and set user set information of various measurements and operation modes, or back-up periods or the like of the protective relay according to a predetermined operation program.

The display part 140 is constituted by LCD displaying various power source states detected through the voltage and current detecting part 110 or various set commands inputted through the key input part 130 by characters or graphics, etc.

The memory part 150 is constituted to select and to store item by item e.g. a faulty data, a wave data, a demand data and a key handling data inputted respectively through the voltage and current detecting part 110 and the key input part 130 according to a predetermined control.

The digital signal processing part 160 controls total operations of the devices as mentioned above, and prosecutes the RDFT(Recursive Discrete Fourier Transform) operation for the measuring data inputted from the analog-digital converting part 120 and then prosecutes a buffering, and thereafter, stores item by item in the memory part 140.

The digital signal processing part 160 is provided with two accumulation buffers, that is, a first accumulation buffer for measuring(a measurement accumulation buffer) 161 and a second accumulation buffer for updating(an update accumulation buffer) 165 in order for the RDFT to operate dually.

The measurement data includes event data, faulty data, wave data, demand data and key handling data, etc.

In the invention, the digital signal processing part 160 operates dually the RDFT in order to apply a way of clearing accumulation buffer of RDFT.

In the digital signal processing part 160, when prosecuting the RDFT(Recursive Discrete Fourier Transform) operation with the data that is converted to digital, a manner of operating the accumulation buffer (first accumulation buffer, second accumulation buffer) dually is applied as in FIG. 5.

Namely, FIG. 5 represents a managing way of how a value of the first accumulation buffer for measuring(a measurement accumulation buffer) 161 is replaced in every period for renewal by a value from the second accumulation buffer for updating(an update accumulation buffer) 165, which both being used into RDFT and thereafter, the second accumulation buffer for updating 165 is initialized to '0'.

In case of a Full-DFT approach , and since every time the initialization is made for the accumulation buffer , even though data of the accumulation buffer is damaged by external disturbances, data of the accumulation buffer is able to be restored automatically to an effective data in the next period, while in the RDFT approach , and in case of the data of the accumulation buffer is damaged, the data is not able to be restored automatically so the accumulating buffers are necessary for both measuring and updating.

Formula 1 as shown below represents a numerical formula of Full-DFT(Discrete Fourier Transform) that is a typical approach among phaser operation algorithms for obtaining sizes and phases from instantaneous values of analog signals(voltage, current)

## Formula 1

$$X = \frac{2}{N} \sum_{k=0}^{N-1} x_k e^{-j\frac{2\pi}{N}k}$$

$$X_{Real} = \frac{2}{N} \sum_{k=0}^{N-1} x_k \cos \frac{2\pi}{N}k$$

$$X_{Imag.} = \frac{2}{N} \sum_{k=0}^{N-1} x_k \sin \frac{2\pi}{N}k$$

wherein, N is a frame size( number of samples of a period), $X_{Real}$ is a real component of a fundamental wave of the analog signals(voltage, current), $X_{Imag.}$ is an imaginary component of a fundamental wave of the analog signals(voltage, current).

In case of a Full-DFT of Formula 1 is performed, the approach involves multiplying and accumulating Cos, Sin bases for a number of samples of a period (every time), leading to that the total number of operations is high and accordingly a burden of the operation for signal processes of real time is huge.. According thereto, by applying the RDFT(Recursive Discrete Fourier Transform) approach which is a transformation of a Full-DFT approach , it was enabled to reduce the operation burden and at the same time, to prosecute a phaser operation.

FIG. 6 is a flowchart showing operation procedures of RDFT in the digital signal processing part.

First, the digital signal processing part 160 is supplied a digital data from the analog-digital converting part 120 (S11).

Subsequently, the digital signal processing part 160 counts and accumulates the number of samples of data inputted from the analog-digital converting part 120 and thereafter, compares the counted accumulation number of samples with the value of a period to determine whether it is the same (S12, S13).

In the above, if the counted accumulation number of samples is less than the value of a period, the digital signal processing part 160 performs the RDFT operation for digital data inputted from the analog-digital converting part 120 and stores temporarily and dually in the first measurement accumulation buffer 161 and the second update accumulation buffer 165(S14).

If in the step S13, the counted accumulation number of samples and the value of a period are the same, the digital signal processing part 160 uses the value of the second update accumulation buffer 165 and replacing the value of the first measurement accumulation buffer 161 and then initializes the second update accumulation buffer 165(S15). Namely, in the invention, the first measurement accumulation buffer 161 is replaced by the value of the second update accumulation buffer 165 and then, initialize the second update accumulation buffer 165.

Subsequently, the digital signal processing part 160 gets also to input the counted accumulation number of samples to '0' (S16).

After inputting each of the second update accumulation buffer 165 and the counted accumulation frequency to '0', the digital signal processing part 160 prosecutes the RDFT operation for the inputted digital data and then stores temporarily and dually in the first measurement accumulation buffer 161 and the second update accumulation buffer 165(S14).

Since the digital signal processing part 160 prosecutes the RDFT operation using the first measurement accumulation buffer 161 and the second update accumulation buffer 165, even though, in an intermediate, a value that is not effective is inputted in the accumulation buffer, in the next period, it is possible to measure using the effective data. Namely, the digital signal processing part 160 prosecutes dually the RDFT operation in order to apply a wayof clearing the accumulation buffer of the RDFT.

A formula 2 as below represents the RDFT (Recursive Discrete Fourier Transform) to which the invention is applied.

## Formula 2

$$X = X_{pre} + \frac{2}{N}(x_k - x_{k\_pre})e^{-j\frac{2\pi}{N}k}$$

$$X_{Real} = X_{Real\_pre} - \frac{2}{N}(x_k - x_{k\_pre})\cos\frac{2\pi}{N}k$$

$$X_{Imag.} = X_{Imag\_pre} + \frac{2}{N}(x_k - x_{k\_pre})\sin\frac{2\pi}{N}k$$

wherein, N is a frame size (number of samples of a period of time), $X_{Real}$ is a real component of a fundamental wave of the analog signals(voltage, current), $X_{Imag}$ is an imaginary component of a fundamental wave of the analog signals(voltage, current), Xpre is a previous value of the accumulation buffer, $x_k$ is a sampled data of $k^{th}$ period , and $x_{k\,pre}$ is a sampled data prior to a period of the $k^{th}$ period.

Accordingly, in the invention, even in case of an accumulation buffer does not initialize when a phaser operation algorithm such as RDFT (Recursive Discrete Fourier Transform) is applied and a value of the accumulation buffer is damaged due to intervening of noises, etc., it is still possible that the value is automatically recovered. This means that a system protection function can be secured more surely by enhancing a reliability of operation that is a factor of important requirements of the protective relay.

While the invention has been shown and described with reference to exemplary embodiments thereof, it will be understood by those skilled in the art that various changes in form and details may be made therein without departing from the scope of the invention as defined by the appended claims.

## Claims

1. A device for processing an input data of a protective relay, the device comprising:

   a voltage and current detecting part (110) configured to detect a voltage and current on an electric line;
   an analog-digital converting part (120) configured to sample an analog signal inputted through the voltage and current detecting part (110) by a predetermined sampling frequency and then convert the sampled analog input signal to digital data;
   a memory part (150) configured to store event data, fault data, wave data, and demand data, according to a predetermined control, which are inputted respectively through the voltage and current detecting part (110);
   **characterized by**
   a digital signal processing part (160) including a measurement accumulation buffer (161) and an update accumulation buffer (165), wherein the digital signal processing part (160) is configured to:

count and accumulate the number of samples of the digital data from the analog-digital converting part (120), compare the counted and accumulated number of samples with a value of one clock cycle;
responsive to determining that the counted and accumulated number of samples is less than the value of one clock cycle, execute an Recursive Discrete Fourier Transform, RDFT, operation on the digital data from the analog-digital converting part (120) and store a result of the RDFT operation in the measurement accumulation buffer (161) and the update accumulation buffer (165); and
responsive to determining that the counted and accumulated number of samples is equal to the value of one clock cycle, replace the result of the RDFT operation stored in the measurement accumulation buffer (161) with the result of the RDFT operation stored in the update accumulation buffer (165), and initialize the result of the RDFT operation stored in the update accumulation buffer (165) and the counted and accumulated number of samples.

2. A method for processing an input data of a protective relay, the method **characterized by**:

inputting sampled digital data to a digital signal processing part(160);
counting and accumulating the number of samples of the inputted digital data;
comparing the counted accumulated number of samples with a value of one clock cycle;
responsive to determining that the counted and accumulated number of samples is less than the value of one clock cycle, executing an Recursive Discrete Fourier Transform, RDFT, operation on the digital data from the analog-digital converting part (120) and storing a result of the RDFT operation in the measurement accumulation buffer (161) and the update accumulation buffer (165); and
responsive to determining that the counted and accumulated number of samples is equal to the value of one clock cycle, replacing the result of the RDFT operation stored in the measurement accumulation buffer (161) with the result of the RDFT operation stored in the update accumulation buffer (165), and initializing the result of the RDFT operation stored in the update accumulation buffer (165) and the counted and accumulated number of samples.

**Patentansprüche**

1. Vorrichtung zur Verarbeitung von Eingangsdaten eines Schutzrelais, die Vorrichtung umfassend:

Spannungs- und Stromerfassungsteil (110), das konfiguriert ist, um eine Spannung und einen Strom auf einer elektrischen Leitung zu erfassen;
Analog-Digital-Wandlerteil (120), das so konfiguriert ist, dass es ein über den Spannungs- und Stromerfassungsteil (110) eingegebenes Analogsignal mit einer vorbestimmten Abtastfrequenz abtastet und dann das abgetastete analoge Eingangssignal in digitale Daten umwandelt;
Speicherteil (150), das so konfiguriert ist, dass es Ereignisdaten, Fehlerdaten, Wellendaten und Anforderungsdaten entsprechend einer vorbestimmten Steuerung speichert, die jeweils durch den Spannungs- und Stromerfassungsteil (110) eingegeben werden; **gekennzeichnet durch**
Digitales Signalverarbeitungsteil (160) mit einem Messdaten-Akkumulationspuffer (161) und einem Update-Akkumulationspuffer (165), wobei das digitale Signalverarbeitungsteil (160) konfiguriert ist zum:

Zählen und Akkumulieren der Anzahl an Abtastwerten der digitalen Daten von dem Analog-Digital-Wandlerteil (120),
Vergleichen der gezählten und akkumulierten Anzahl an Abtastwerten mit einem Wert eines Taktzyklus;
in Reaktion auf die Bestimmung, dass die gezählte und akkumulierte Anzahl an Abtastwerten kleiner als der Wert eines Taktzyklus ist, Ausführen einer rekursiven diskreten Fourier-Transformationsoperation (Recursive Discrete Fourier Transform, RDFT) an den digitalen Daten aus dem Analog-Digital-Wandlerteil (120) und Speichern eines Ergebnisses der RDFT-Operation im Messdaten-Akkumulationspuffer (161) und im Update-Akkumulationspuffer (165); und
in Reaktion auf die Bestimmung, dass die gezählte und akkumulierte Anzahl an Abtastwerten gleich dem Wert eines Taktzyklus ist, Ersetzen des Ergebnisses der in dem Messdaten-Akkumulationspuffer (161) gespeicherten RDFT-Operation durch das Ergebnis der in dem Update-Akkumulationspuffer (165) gespeicherten RDFT-Operation und Initialisieren des Ergebnisses der in dem Update-Akkumulationspuffer (165) gespeicherten RDFT-Operation und der gezählten und akkumulierten Anzahl an Abtastwerten.

**2.** Verfahren zur Verarbeitung von Eingangsdaten eines Schutzrelais, das Verfahren **gekennzeichnet durch**:

Eingeben von abgetasteten digitalen Daten in ein digitales Signalverarbeitungsteil (160);

Zählen und Akkumulieren der Anzahl an Abtastwerten der digitalen Eingangsdaten;

Vergleichen der gezählten akkumulierten Anzahl an Abtastwerten mit einem Wert eines Taktzyklus;

in Reaktion auf die Bestimmung, dass die gezählte und akkumulierte Anzahl an Abtastwerten kleiner als der Wert eines Taktzyklus ist, Ausführen einer rekursiven diskreten Fourier-Transformationsoperation (Recursive Discrete Fourier Transform, RDFT) an den digitalen Daten aus dem Analog-Digital-Wandlerteil (120) und Speichern eines Ergebnisses der RDFT-Operation im Messdaten-Akkumulationspuffer (161) und im Update-Akkumulationspuffer (165); und

in Reaktion auf die Bestimmung, dass die gezählte und akkumulierte Anzahl an Abtastwerten gleich dem Wert eines Taktzyklus ist, Ersetzen des Ergebnisses der in dem Messdaten-Akkumulationspuffer (161) gespeicherten RDFT-Operation durch das Ergebnis der in dem Update-Akkumulationspuffer (165) gespeicherten RDFT-Operation und Initialisieren des Ergebnisses der in dem Update-Akkumulationspuffer (165) gespeicherten RDFT-Operation und der gezählten und akkumulierten Anzahl an Abtastwerten.

**Revendications**

**1.** Dispositif pour le traitement de données d'entrée d'un relais de protection, le dispositif comprenant :

une partie de détection de tension et de courant (110) configurée pour détecter une tension et un courant sur une ligne électrique ;

une partie de conversion analogique-numérique (120) configurée pour échantillonner un signal analogique entré par le biais de la partie de détection de tension et de courant (110) par une fréquence d'échantillonnage prédéterminée, puis convertir le signal d'entrée analogique échantillonné en données numériques ;

une partie de mémoire (150) configurée pour stocker des données d'événement, des données de défaillance, des données d'onde et des données de demande, selon une commande prédéterminée, qui sont entrées respectivement par le biais de la partie de détection de tension et de courant (110) ; **caractérisé par**

une partie de traitement de signal numérique (160) incluant un tampon d'accumulation de mesures (161) et un tampon d'accumulation de mises à jour (165), dans lequel la partie de traitement de signal numérique (160) est configurée pour :

compter et accumuler le nombre d'échantillons des données numériques provenant de la partie de conversion analogique-numérique (120),

comparer le nombre d'échantillons comptés et accumulés avec une valeur d'un cycle d'horloge ;

en réponse au fait de déterminer que le nombre d'échantillons comptés et accumulés est inférieur à la valeur d'un cycle d'horloge, exécuter une opération de transformée de Fourier discrète récursive, RDFT, sur les données numériques provenant de la partie de conversion analogique-numérique (120) et stocker un résultat de l'opération RDFT dans le tampon d'accumulation de mesures (161) et le tampon d'accumulation de mises à jour (165) ; et

en réponse au fait de déterminer que le nombre d'échantillons comptés et accumulés est égal à la valeur d'un cycle d'horloge, remplacer le résultat de l'opération RDFT stocké dans le tampon d'accumulation de mesures (161) par le résultat de l'opération RDFT stocké dans le tampon d'accumulation de mises à jour (165), et initialiser le résultat de l'opération RDFT stocké dans le tampon d'accumulation de mises à jour (165) et le nombre d'échantillons comptés et accumulés.

**2.** Procédé pour le traitement de données d'entrée d'un relais de protection, le procédé étant **caractérisé par** :

l'entrée de données numériques échantillonnées dans une partie de traitement de signal numérique (160) ;

le comptage et l'accumulation du nombre d'échantillons des données numériques entrées ;

la comparaison du nombre d'échantillons comptés accumulés avec une valeur d'un cycle d'horloge ;

en réponse au fait de déterminer que le nombre d'échantillons comptés et accumulés est inférieur à la valeur d'un cycle d'horloge, l'exécution d'une opération de transformée de Fourier discrète récursive, RDFT, sur les données numériques provenant de la partie de conversion analogique-numérique (120) et le stockage d'un résultat de l'opération RDFT dans le tampon d'accumulation de mesures (161) et le tampon d'accumulation de mises à jour (165) ; et

en réponse au fait de déterminer que le nombre d'échantillons comptés et accumulés est égal à la valeur d'un cycle d'horloge, le remplacement du résultat de l'opération RDFT stocké dans le tampon d'accumulation de mesures (161) par le résultat de l'opération RDFT stocké dans le tampon d'accumulation de mises à jour (165), et l'initialisation du résultat de l'opération RDFT stocké dans le tampon d'accumulation de mises à jour (165) et le nombre d'échantillons comptés et accumulés.

FIG.1

FIG. 2

FIG. 3

FIG. 4

Line

Voltage/Current detecting part — 110

ADC — 120

Display part — 140

First accumulation Buffer — 161

Second accumulation Buffer — 165

Digital signal processing part — 160

Memory part — 150

key Input part — 130

FIG. 5

Value

First accumulation
Buffer(For measuring)

Second accumulation
Buffer(For updating)

1T  2T  3T  4T  5T  6T  7T  8T  9T  10T  Period

FIG. 6

Start

Being supplied sampled digital data — S11

Counting and accumulating the
frequency of inputted data — S12

Counted accumulation frequency is
equal to the value of a period? — S13  — Yes

No

Performing RDFT operation and store in
first and second accumulation buffers — S14

Second accumulation Buffer
= > First accumulation Buffer
Second accumulation Buffer
= > "0"(initialize) — S15

Initializing counted
accumulaton frequency — S16

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910959 A

- JP 2003344463 A